# EUROPÄISCHE PATENTSCHRIFT

(11) **EP 4 630 674 B1**
(45) Veröffentlichungstag und Bekanntmachung des Hinweises auf die Patenterteilung: **07.10.2026**
(21) Anmeldenummer: 23814135.2
(22) Anmeldetag: 27.11.2023
(51) Int. Cl.: F02M 21/02

(54) **GASVENTIL**
GAS VALVE
SOUPAGE DE GAZ

(30) Priorität: 05.12.2022 DE 102022213080
(43) Veröffentlichungstag der Anmeldung: 15.10.2025
(73) Patentinhaber: Robert Bosch GmbH, 70442 Stuttgart (DE)
(72) Erfinder: WERGER, Heinrich, 5431 Kuchl (AT); KORN, Markus, 5081 Anif (AT)
(86) Internationale Anmeldenummer: PCT/EP2023/083100
(87) Internationale Veröffentlichungsnummer: WO 2024/120859

(56) Entgegenhaltungen:
- DE-A1- 102014 224 344
- DE-A1- 102016 212 075
- DE-A1- 102021 201 085

## Beschreibung

Die Erfindung betrifft ein Gasventil, wie es zur dosierten Abgabe eines gasförmigen Brennstoffs in einen Brennraum oder in den Ansaugtrakt einer Brennkraftmaschine Verwendung findet.

### Stand der Technik

Bei Betrieb von Verbrennungsmotoren mit gasförmigen Brennstoffen wird der Brennstoff dosiert unter einem Einblasdruck in den Ansaugtrakt oder auch direkt in einen Brennraum der Brennkraftmaschine eindosiert. Dazu wird meist ein Gasventil mit einem längsbeweglichen Ventilelement verwendet, das mit Hilfe eines elektrischen Aktors gegen die Kraft einer Schließfeder bewegt wird und das mit einem Ventilsitz zusammenwirkt. Durch die Längsbewegung wird ein ringförmiger Strömungsquerschnitt freigegeben oder nach Deaktivierung des Aktors wieder verschlossen. Das Ventilelement öffnet dabei nach außen, das heißt, dass die Öffnungsbewegung des Ventilelements aus dem Gasventil heraus erfolgt. Der elektrische Aktor ist meist ein Elektromagnet, der mit einem Magnetanker oder Tauchanker zusammenwirkt und so eine Öffnungskraft auf das Ventilelement ausübt. Statt dieser sogenannten direkten Steuerung, bei dem die Magnetkraft direkt auf den mit dem Ventilelement fest verbundenen Magnetanker wirkt, kann die Steuerung des Ventilelements auch indirekt über einen servo-hydraulischen Mechanismus erfolgen. In diesem Fall können auch beispielsweise Piezoaktoren verwendet werden, da hier ein kleiner Hub des Aktors ausreicht.

Die genaue Dosierung und der exakte Zeitpunkt ist vor allem bei der Brennstoffeinblasung direkt in einen Brennraum wichtig, um eine effektive und schadstoffarme Verbrennung zu erreichen. Zur Optimierung der Verbrennung ist daneben die Verteilung des gasförmigen Brennstoffs im Brennraum wichtig, damit eine gute Durchmischung mit der Luft im Brennraum stattfindet und keine Bereiche entstehen, in denen ein starker Brennstoff- oder Luftüberschuss vorhanden ist. Dazu ist beispielsweise aus der DE 10 2021 201 085 A1 bekannt, im Gasventil dem Ventilsitz nachgeordnet eine Kammer vorzusehen, von der aus der Brennstoff durch eine Einblasöffnung nach außen gelangt. Die Einblasöffnung kann als in Bezug zur Längsachse des Gasventils schräger Kanal ausgebildet sein, um den Gasstrahl in die gewünschte Richtung abzulenken.

Da das Gasventil mit seinem Ende in den Brennraum ragt, ist die Länge und damit der Bauraum beschränkt. Um eine ausreichende Lenkungswirkung durch die geneigte Einblasöffnung zu erreichen, muss diese einerseits möglichst lang sein und damit ein großes Länge-zu-Durchmesser-Verhältnis (L/D) aufweisen. Andererseits ist ein großer Durchmesser erforderlich, um die erforderliche Gasmenge in kurzer Zeit zum richtigen Zeitpunkt abgeben zu können. Eine Einblasöffnung mit sowohl großem L/D-Verhältnis als auch großem Durchmesser erfordert entsprechend viel Bauraum, der jedoch meist nicht zur Verfügung steht. Dies bedeutet, dass über eine schräge Einblasöffnung nur eine geringe Lenkungswirkung des Gasstrahls erzielt werden kann, was die optimale Verteilung des gasförmigen Brennstoffs im Brennraum erschwert.

### Vorteile der Erfindung

Das erfindungsgemäße Gasventil weist den Vorteil auf, dass mit geringem Bauraum eine wirkungsvolle Lenkung des austretenden Gasstrahls ermöglicht wird, um den gasförmigen Brennstoff im Brennraum optimal zu verteilen. Dazu weist das Gasventil einen Ventilkörper auf, in dem ein mit einem gasförmigen Brennstoff befüllbarer Gasraum ausgebildet ist mit einem darin längsbeweglich angeordneten Ventilelement. Das Ventilelement weist einen tellerförmigen Endabschnitt auf, der mit einem am Ventilkörper ausgebildeten Ventilsitz zum Öffnen und Schließen eines ringförmigen Strömungsquerschnitts zusammenwirkt. Den Ventilkörper umgibt eine zylindrische Hülse, die einen das Ende der Hülse bildenden Bodenabschnitt und eine sich an den Bodenabschnitt anschließende Mantelfläche aufweist, wobei der Bodenabschnitt, die Hülse und der tellerförmige Endabschnitt eine Kammer begrenzen. Die Hülse weist eine Einblasöffnung auf, durch die der gasförmige Brennstoff aus der Kammer austritt, wobei die Einblasöffnung im Bodenabschnitt und in der Mantelfläche ausgebildet ist.

Nach Freigabe des Strömungsquerschnitts strömt der Brennstoff aus dem Gasraum des Gasventils in die Kammer und gelangt von dort durch die Einblasöffnung in den Brennraum der Brennkraftmaschine. Durch die Ausbildung der Einblasöffnung in der Mantelfläche der Hülse wird eine seitliche Öffnung bezüglich der Längsachse des Ventilkörpers gebildet, die den Gasstrahl auch bei einem kleinen L/D-Verhältnis der Einblasöffnung wirkungsvoll seitlich ablenkt, wobei die Hülse nur eine geringe Wandstärke und damit wenig Bauraum benötigt. Der Gasstrahl gelangt so auch in die Randbereiche des Brennraums und vermischt sich optimal mit der Luft im Brennraum, was für eine effektive und schadstoffarme Verbrennung sorgt.

In einer ersten vorteilhaften Ausgestaltung der Erfindung ist die Einblasöffnung durch eine im Bodenabschnitt der zylindrischen Hülse ausgebildete Bohrung und eine seitliche Öffnung in deren Mantelfläche gebildet, die zusammen die Einblasöffnung bilden. Dies erlaubt eine gezielte Gestaltung der seitlichen Öffnung und damit eine einfache Optimierung der seitlichen Ablenkung des Gasstrahls durch diese Öffnung.

In einer weiteren vorteilhaften Ausgestaltung der Erfindung ist die Einblasöffnung durch eine zylindrische Bohrung gebildet, die im Bodenabschnitt und im Mantel verläuft. Hier wird die Einblasöffnung durch eine einzelne Bohrung gebildet, die so in der zylindrischen Hülse verläuft, dass neben dem Bodenabschnitt auch die Mantelfläche durchstoßen wird und die gewünschte seitliche Öffnung entsteht, die auf diese Weise in einem einzigen Arbeitsgang gefertigt werden kann.

In einer weiteren vorteilhaften Ausgestaltung ist die Bohrung zur Längsachse der Hülse bzw. des Ventilkörpers geneigt ausgebildet. Neben der Wirkung der seitlichen Öffnung kann die Ablenkung des Gasstrahls so durch die geneigte zylindrische Bohrung optimiert und verstärkt werden. Dabei weist die zylindrische Bohrung vorzugsweise einen kreisrunden Querschnitt auf und ein Längen-zu-Durchmesserverhältnis (L/D) von 0,75 bis 2,5.

In einer weiteren vorteilhaften Ausgestaltung weist die zylindrische Bohrung einen ovalen oder rechteckigen Querschnitt auf. Eine solche Ausgestaltung kann vorteilhaft sein, um den gasförmigen Brennstoff in einem großen oder einem ungewöhnlich geformten Brennraum optimal zu verteilen. Auch für den Fall, dass das Gasventil nicht genau zentrisch in den Brennraum ragt, kann eine solche Formung der Einblasöffnung vorteilhaft sein.

### Zeichnung

In der Zeichnung sind verschiedene Beispiele des erfindungsgemäßen Gasventils dargestellt. Es zeigt
- Fig. 1: ein Gasventil, wie es aus dem Stand der Technik bekannt ist,
- Fig. 2a: und
- Fig. 2b: ein erstes Ausführungsbeispiel eines erfindungsgemäßen Gasventils und
- Fig. 3: ein weiteres Ausführungsbeispiel in der gleichen Darstellung wie Fig. 1.

### Beschreibung der Ausführungsbeispiele

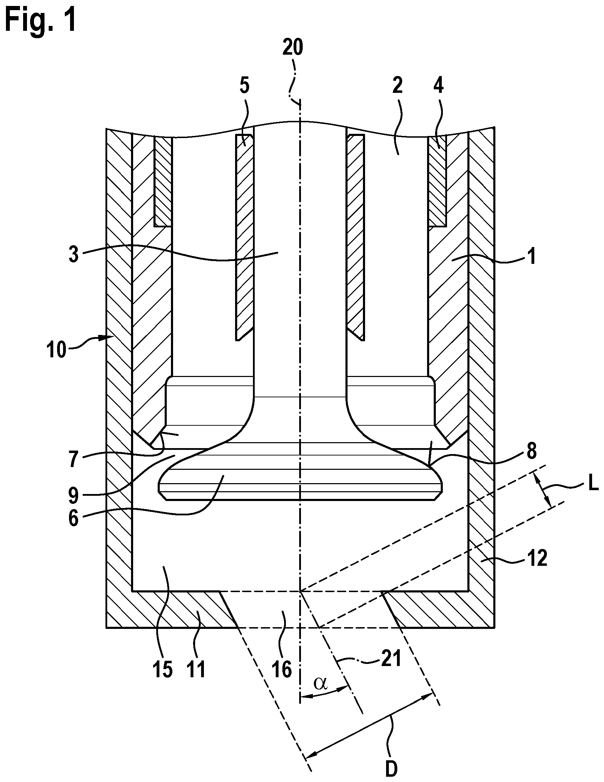

In **Fig. 1** ist ein Gasventil zur Einblasung eines gasförmigen Brennstoffs in einen Brennraum oder auch in einen Ansaugtrakt einer Brennkraftmaschine gezeigt, wie es aus dem Stand der Technik bekannt ist, wobei nur die wesentlichen Teile des Gasventils dargestellt sind. Das Gasventil weist einen Ventilkörper 1 auf, der im Wesentlichen zylindrisch geformt ist und in dem ein Gasraum 2 ausgebildet ist, der mit gasförmigem Brennstoff unter einem Einblasdruck befüllbar ist. Im Gasraum 2 ist ein rotationssymmetrisches Ventilelement 3 längsverschiebbar angeordnet, das an seinem Ende einen tellerförmigen Endabschnitt 6 aufweist, der aus dem Ventilkörper 1 herausragt. An dem tellerförmigen Endabschnitt 6 ist eine dem Ventilkörper 1 zugewandte Dichtfläche 8 ausgebildet, mit der das Ventilelement 3 mit einem am brennraumseitigen, in der Zeichnung unteren Ende des Ventilkörpers 1 ausgebildeten Ventilsitz 7 zusammenwirkt zum Öffnen und Schließen eines Strömungsquerschnitts 9, der zwischen der Dichtfläche 8 und dem Ventilsitz 7 aufgesteuert wird, wenn das Ventilelement 3 in seiner Öffnungsstellung ist, wie in **Fig. 1** dargestellt. Um das Ventilelement 3 in Längsrichtung zu bewegen ist am Ventilelement 3 ein Tauchanker 5 angeordnet, der mit einem im Ventilkörper 1 ausgebildeten Elektromagneten 4 zusammenwirkt, so dass das Ventilelement 3 bei Bestromung des Elektromagneten 6 in eine Öffnungsrichtung aus dem Ventilkörper 1 heraus bewegt wird. Diese Bewegung erfolgt gegen die Kraft einer in der Zeichnung nicht gezeigten Schließfeder, die das Ventilelement 3 bei ausgeschaltetem Elektromagneten 4 in Anlage an den Ventilsitz 7 in eine Schließstellung drückt.

Der Ventilkörper 1 ist von einer zylindrischen Hülse 10 umgeben, die brennraumseitig über den Ventilkörper 1 hinausragt. Die zylindrische Hülse 10 weist einen Bodenabschnitt 11 und eine Mantelfläche 12 auf, die an den Bodenabschnitt 11 angrenzt. Durch den Bodenabschnitt 11, die Mantelfläche 12 und den tellerförmigen Endabschnitt 6 des Ventilelements 3 wird eine Kammer 15 begrenzt, in die der tellerförmige Endabschnitt in Öffnungsstellung des Ventilelements 3 eintaucht, so dass der gasförmige Brennstoff aus dem Gasraum 2 in die Kammer 15 strömt. Von der Kammer 15 gelangt der Brennstoff über eine Einblasöffnung 16 in einen nicht näher dargestellten Brennraum oder auch in einen Ansaugtrakt einer Brennkraftmaschine. Die Einblasöffnung 16 ist als zylindrische Bohrung 18 im Bodenabschnitt 11 ausgebildet, wobei die Achse 21 der zylindrischen Bohrung 18 mit der Längsachse des Ventilkörpers 1 einen Winkel α einschließt, um den aus der Einblasöffnung 16 austretenden Gasstrahl seitlich abzulenken.

Das Verhältnis von Länge L der Bohrung 18 zu dessen Durchmesser (L/D-Verhältnis) ist dabei kleiner als 1, was die seitliche Ablenkung des Gasstrahls beschränkt, denn die Lenkungswirkung ist umso stärker, je größer das L/D-Verhältnis ist, also umso länger die Bohrung 18 im Verhältnis zu deren Durchmesser ist. Die durch die Bohrungsneigung bewirkte Ablenkung ist bei diesem aus dem Stand der Technik bekannten Gasventil also nur gering.

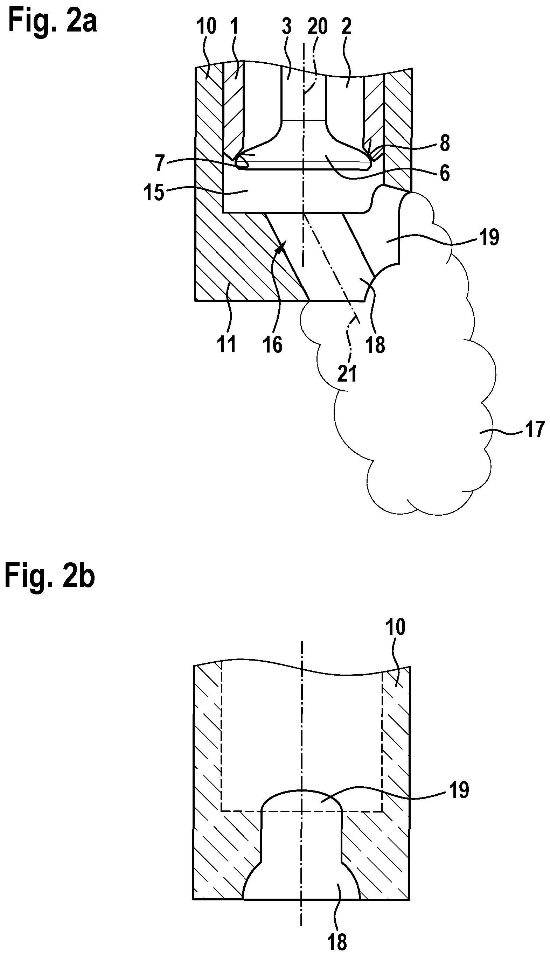

In **Fig. 2a** ist ein erstes Ausführungsbeispiel eines erfindungsgemäßen Gasventils dargestellt, wobei die Darstellung im Wesentlichen der in **Fig. 1** entspricht. Im Bodenabschnitt 11 ist eine zylindrische Bohrung 18 und in der Mantelfläche 12 eine seitliche Öffnung 19 ausgebildet, die zusammen die Einblasöffnung 16 bilden, durch die der gasförmige Brennstoff aus der Kammer 15 in den Brennraum. Die seitliche Öffnung 19 in der Mantelfläche 12 verstärkt die Umlenkungswirkung und bewirkt eine deutliche Ablenkung des Gasstrahls 17 nach recht, wie in der **Fig. 2a** illustriert. Zur Verdeutlichung zeigt **Fig. 2b** eine seitliche Draufsicht auf das Gasventil bzw. die zylindrische Hülse 10, wobei die Ansicht gegenüber **Fig. 2a** um 90° gedreht ist. Die Ausgestaltung der seitlichen Öffnung 19 kann unabhängig von der zylindrischen Bohrung 18 erfolgen, was große Freiheiten bei der Gestaltung eröffnet. Durch eine gezielte Optimierung der seitlichen Öffnung 19 kann die Wirkung optimal auf den jeweiligen Brennraum angepasst werden, z.B. bei besonders großen oder ungewöhnlich geformten Brennräumen.

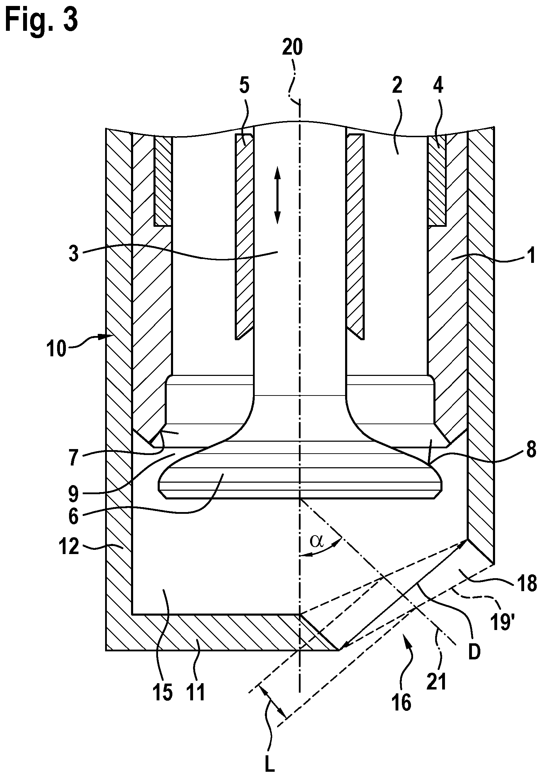

In **Fig. 3** ist in gleicher Darstellung ein weiteres Ausführungsbeispiel eines erfindungsgemäßen Gasventils gezeigt, wobei im Folgenden nur auf die Unterschiede zu dem in **Fig. 2a** dargestellten Ausführungsbeispiel eingegangen wird. Die Einblasöffnung 16 ist hier in Form nur einer einzelnen zylindrischen Bohrung 18 ausgebildet. Die zylindrische Bohrung 18 kann so durch einen einzigen Bearbeitungsschritt erfolgen, indem eine Bohrung mit einem entsprechend großen Durchmesser und in einem Neigungswinkel α zur Längsachse 20 ausgebildet wird, dass sie sowohl im Bodenabschnitt 11 also auch in der Mantelfläche 12 der zylindrischen Hülse 10 verläuft. Die Einblasöffnung 16 erhält so in einfacher Weise eine seitliche Öffnung, was - wie schon oben erläutert - die seitliche Ablenkung des austretenden Gasstrahls deutlich verstärkt. Das L/D-Verhältnis kann auch hier relativ klein sein im Bereich von 0,75 bis 2,5, was gegenüber einer längeren Einblasöffnung platzsparend ist. Die so ermöglichte kurze Bauweise des Gasventils vermindert die Gefahr einer Überhitzung am Ende der zylindrischen Hülse 10 durch die Brennraumgase.

Die zylindrische Bohrung 10 kann wie in den gezeigten Ausführungsbeispielen einen kreisrunden Querschnitt aufweisen. Es ist jedoch auch möglich, die zylindrische Bohrung 10 mit einem ovalen oder rechteckigen Querschnitt auszubilden, was einen weiteren Parameter zur optimalen Verteilung des gasförmigen Brennstoffs im Brennraum darstellt. Eine zylindrische Bohrung ist im Kontext dieser Erfindung eine Form die sich ergibt, wenn eine geschlossene Kurve entlang einer geraden Strecke bewegt wird.

## Patentansprüche

1. Gasventil zur dosierten Abgabe eines gasförmigen Brennstoffs, mit einem Ventilkörper (1), in dem ein mit einem gasförmigen Brennstoff befüllbarer Gasraum (2) ausgebildet ist mit einem darin längsbeweglich angeordneten Ventilelement (3), wobei das Ventilelement (3) einen tellerförmigen Endabschnitt (6) aufweist, der mit einem am Ventilkörper (1) ausgebildeten Ventilsitz (7) zum Öffnen und Schließen eines ringförmigen Strömungsquerschnitts (9) zusammenwirkt, und mit einer den Ventilkörper (1) umgebenden zylindrischen Hülse (10), die einen das Ende der Hülse (10) bildenden Bodenabschnitt (11) und eine sich an den Bodenabschnitt (11) anschließende Mantelfläche (12) aufweist, wobei der Bodenabschnitt (11), die Hülse (12) und der tellerförmige Endabschnitt (6) eine Kammer (15) begrenzen,
**dadurch gekennzeichnet,**
**dass** die Kammer (15) eine Einblasöffnung (16) aufweist, die im Bodenabschnitt (11) und in der Mantelfläche (12) der zylindrischen Hülse (10) ausgebildet ist.

2. Gasventil nach Anspruch 1, **dadurch gekennzeichnet, dass** die Einblasöffnung (16) aus einer im Bodenabschnitt (11) ausgebildeten zylindrischen Bohrung (18) und einer in der Mantelfläche (12) ausgebildeten seitliche Öffnung (19) gebildet ist.

3. Gasventil nach Anspruch 1, **dadurch gekennzeichnet, dass** die Einblasöffnung durch eine zylindrische Bohrung (18) gebildet ist, die im Bodenabschnitt (11) und in der Mantelfläche (12) verläuft.

4. Gasventil nach Anspruch 2 oder 3, **dadurch gekennzeichnet, dass** die Mittelachse (21) der Bohrung (18) zur Längsachse (20) des Ventilkörpers (1) um einen Winkel α geneigt ist.

5. Gasventil nach einem der Ansprüche 2 bis 4, **dadurch gekennzeichnet, dass** die zylindrische Bohrung (18) einen kreisrunden Querschnitt aufweist.

6. Gasventil nach Anspruch 5, **dadurch gekennzeichnet, dass** das Länge (L) zu Durchmesser (D) Verhältnis (L/D) der zylindrischen Bohrung (18) zwischen 0,75 und 2,5 beträgt.

7. Gasventil nach einem der Ansprüche 2 bis 4, **dadurch gekennzeichnet, dass** die zylindrische Bohrung (18) einen ovalen oder rechteckigen Querschnitt aufweist.

## Claims

1. Gas valve for dosed discharge of a gaseous fuel, having a valve body (1) in which a gas chamber (2) fillable with a gaseous fuel is formed, having a valve element (3) which is arranged longitudinally movably therein, wherein the valve element (3) has a disc-shaped end portion (6) which interacts with a valve seat (7), formed on the valve body (1), for opening and closing an annular flow cross section (9), and having a cylindrical sleeve (10) which surrounds the valve body (1) and has a base portion (11) forming the end of the sleeve (10) and has a lateral surface (12) adjoining the base portion (11), wherein the base portion (11), the sleeve (12) and the disc-shaped end portion (6) delimit a chamber (15),
**characterized**
**in that** the chamber (15) has an injection opening (16) which is formed in the base portion (11) and in the lateral surface (12) of the cylindrical sleeve (10).

2. Gas valve according to Claim 1, **characterized in that** the injection opening (16) is formed from a cylindrical bore (18), which is formed in the base portion (11), and a side opening (19), which is formed in the lateral surface (12).

3. Gas valve according to Claim 1, **characterized in that** the injection opening is formed by a cylindrical bore (18) which extends in the base portion (11) and in the lateral surface (12).

4. Gas valve according to Claim 2 or 3, **characterized in that** the central axis (21) of the bore (18) is inclined by an angle a in relation to the longitudinal axis (20) of the valve body (1).

5. Gas valve according to one of Claims 2 to 4, **characterized in that** the cylindrical bore (18) has a circular cross section.

6. Gas valve according to Claim 5, **characterized in that** the length (L)-to-diameter (D) ratio (L/D) of the cylindrical bore (18) is between 0.75 and 2.5.

7. Gas valve according to one of Claims 2 to 4, **characterized in that** the cylindrical bore (18) has an oval or rectangular cross section.

## Revendications

1. Soupape à gaz destinée à la distribution dosée d'un combustible gazeux, comprenant un corps de soupape (1), dans lequel est formé un espace à gaz (2) pouvant être rempli d'un combustible gazeux, avec un élément de soupape (3) disposé à l'intérieur de celui-ci de manière mobile longitudinalement, l'élément de soupape (3) présentant une section d'extrémité en forme de disque (6), qui coopère avec un siège de soupape (7) formé sur le corps de soupape (1) pour ouvrir et fermer une section transversale d'écoulement annulaire (9), et avec un manchon cylindrique (10) entourant le corps de soupape (1), qui présente une section de fond (11) constituant l'extrémité du manchon (10) et une surface d'enveloppe (12) se raccordant à la section de fond (11), la section de fond (11), le manchon (12) et la section d'extrémité en forme de disque (6) délimitant une chambre (15),
caractérisée
la chambre (15) présente une ouverture d'injection (16), qui est formée dans la section de fond (11) et dans la surface d'enveloppe (12) du manchon cylindrique (10).

2. Soupape à gaz selon la revendication 1, **caractérisée en ce que** l'ouverture d'injection (16) est formée d'un alésage cylindrique (18) formé dans la section de fond (11) et d'une ouverture latérale (19) formée dans la surface d'enveloppe (12).

3. Soupape à gaz selon la revendication 1, **caractérisée en ce que** l'ouverture d'injection est formée par un alésage cylindrique (18), qui s'étend dans la section de fond (11) et dans la surface d'enveloppe (12).

4. Soupape à gaz selon la revendication 2 ou 3, **caractérisée en ce que** l'axe central (21) de l'alésage (18) est incliné d'un angle a par rapport à l'axe longitudinal (20) du corps de soupape (1).

5. Soupape à gaz selon l'une des revendications 2 à 4, **caractérisée en ce que** l'alésage cylindrique (18) présente une section transversale circulaire.

6. Soupape à gaz selon la revendication 5, **caractérisée en ce que** le rapport entre la longueur (L) et le diamètre (D) (L/D) de l'alésage cylindrique (18) est compris entre 0,75 et 2,5.

7. Soupape à gaz selon l'une des revendications 2 à 4, **caractérisée en ce que** l'alésage cylindrique (18) présente une section transversale ovale ou rectangulaire.
